# EUROPÄISCHE PATENTSCHRIFT

(11) **EP 0 347 666 B1**
(45) Veröffentlichungstag und Bekanntmachung des Hinweises auf die Patenterteilung: **13.04.1994**
(21) Anmeldenummer: 89110455.6
(22) Anmeldetag: 09.06.1989
(51) Int. Cl.: F16F 13/00

(54) **Schwingungsdämpfende und schwingungskompensierende Lageranordnung**
Bearing arrangement for absorbing and compensating vibrations
Agencement de support pour amortir et compenser les oscillations

(30) Priorität: 24.06.1988 DE 3821368
(43) Veröffentlichungstag der Anmeldung: 27.12.1989
(73) Patentinhaber: AUDI AG, 85045 Ingolstadt (DE)
(72) Erfinder: Naumann, Fritz, Dr., D-8071 Stammham (DE); Schäper, Siegfried, Dr., D-8071 Wettstetten (DE); Haldenwanger, Hans-Günther, D-8070 Ingolstadt (DE); Klose, Peter, Dr., D-8079 Buxheim (DE)
(74) Vertreter: Le Vrang, Klaus

(56) Entgegenhaltungen:
- EP-A- 0 216 082
- DE-A- 3 433 255
- PATENT ABSTRACTS OF JAPAN vol. 11, no. 157 (M-590)() 21 Mai 1987,& JP-A-61 286634 (MEIRITSU SEIKI KK) 17 Dezember 1986,
- MESSEN PRUFEN AUTOMATISIEREN. no. 9, September 1986, BAD WORISHOFEN DE Seiten
- 553 - 558; R.Nill et al.: "Ein piezoelektrischer Schwingungserreger fürdynamische Untersuchungen"
- IEEE TRANSACTIONS ON AUDIO AND ELECTROACOUSTICS. vol. AU-19, no. 1, März 1971,NEW YORK US Seiten 6 - 12; C.P.Germano: "Flexure Mode PiezoelectricTransducers"
- PATENT ABSTRACTS OF JAPAN vol. 10, no. 40 (M-454)(2097) 18 Februar 1986,& JP-A-60 192141 (TOYODA GOSEI KK) 30 September 1985,

## Beschreibung

Die Erfindung bezieht sich auf eine schwingungsdämpfende und schwingungskompensierende Lageranordnung mit den weiteren Merkmalen nach dem Oberbegriff des Patentanspruches 1.

Durch die DE 34 33 255 A1 ist eine Lageranordnung bekannt geworden, bei der ein schwingungsdämpfendes Motorlager mit einem Lagerkern und einem Widerlager sowie mit einem Federelement und einem flüssigkeitsgefüllten Arbeitsraum einer hydraulischen Dämpfungseinrichtung beschrieben wird , wobei überdies eine mit einem Stellglied versehene Kompensationswand vorgesehen ist, die einen Teil der Begrenzungsfläche des Arbeitsraumes überdeckt. Über eine einen Prozeßrechner umfassende Steuereinheit wird das Stellglied beaufschlagt, um eine Kompensation von durch Störschwingungen des schwingenden Körpers verursachte Druckänderungen der Flüssigkeit zu bewirken. Der Prozeßrechner nimmt ein mit einem Signalgeber erfaßtes Führungssignal, dem sich Störschwingungen in repräsentativer Weise zuordnen lassen, sowie mindestens ein weiteres, den Zustand des schwingenden Körpers kennzeichnendes Signal auf und ist überdies in Abhängigkeit von der Führungsgröße frei programmierbar.
Mit der in der DE 34 33 255 A1 im einzelnen gezeigten Ansteuerung eines Stellgliedes innerhalb eines schwingungsdämpfendes Lagers sind an und für sich gute Voraussetzungen geschaffen, um die auftretenden Störschwingungen in ihrer Gesamtheit gut kompensieren zu können. Nachteilig ist allerdings die konstruktive Verwirklichung von Stellglied und angeschlossener Kompensationswand zur Umsetzung der eingeleiteten Steuersignale. Dadurch, daß die Fläche der Kompensationswand nur einen relativ geringen Teil der Begrenzungsfläche des Arbeitsraumes überdeckt, ist zunächst die Wirkung ihrer Bewegungen relativ gering. Des weiteren, und dies ist sehr wesentlich, scheint die Gestaltung des Stellgliedes nicht unbedingt geeignet, die Umsetzung der vom Prozeßrechner ausgehenden Steuersignale in befriedigender Weise ausführen zu können. Der verwendete elektromotorische Antrieb wird die vom Prozeßrechner ausgegebenen Steuersignale nicht in der erforderlichen Güte an die Kompensationswand weitergeben können.
Aus den japanischen Patentveröffentlichungen 61-233 238 und 60-155 027 sind ebenfalls schwingungsdämpfende Motorlager bekannt geworden, bei denen jeweils eine von einem Stellglied beaufschlagbare Kompensationswand vorgesehen ist. Dabei ist im ersten Falle die Kompensationswand als mittige, einen flüssigkeitsgefüllten Arbeitsraum von einem ebenfalls flüssigkeitsgefüllten Ausgleichsraum trennende Membran und im zweiten Falle als eine innerhalb des Arbeitsraumes angeordnete großflächige Scheibe ausgebildetet. Durch diese jeweilige Großflächigkeit der Kompensationswand könnten im Prinzip die über Steuersignale eingeleiteten Bewegungen eine gute Kompensation der durch Störschwingungen verursachten Druckänderungen der Flüssigkeit bewirken. Die eingesetzten Steuereinheiten mit zugehörigen Stellgliedern (Spannungsgenerator bzw. Spulenschaltung) schaffen aber nicht die Voraussetzungen, die eine optimale Kompensation der auftretenden Störschwingungen in ihrer Gesamtheit ermöglichen könnten.

Aus der japanischen Patentveröffentlichung 60-192 141 ist schließlich eine Lageranordnung bekannt geworden, mit der ein dem vorstehend beschriebenen Stand der Technik entsprechendes Ziel verfolgt wird und wobei als Stellglied eine den umgekehrten piezoelektrischen Effekt ausnutzende großflächige, gekrümmte Keramikplatte verwendet wird. Mit einem solchen Stellglied können die von einer Steuereinheit ausgehenden Steuersignale an sich rasch, genau und exakt reproduzierbar umgesetzt werden, wobei darüberhinaus die Großflächigkeit der Kompensationswand recht günstig ist. Von Nachteil ist allerdings, daß unter anderem bedingt durch die Bauform der bekannten Vorrichtung mit den der Keramikplatte zugeordneten oberen und unteren Begrenzungswänden und der relativ geringfügigen Auslenkbarkeit der Keramikplatte der Effektivität und der Fähigkeit, Störschwingungen zu kompensieren, enge Grenzen gesetzt sind. Dies reduziert auch die Einsatzmöglichkeiten einer solchermaßen aufgebauten Vorrichtung.

Von diesem Stand der Technik ausgehend liegt der vorliegenden Erfindung die Aufgabe zugrunde, eine solche schwingungsdämpfende und schwingungskompensierende Lageranordnung in der Weise zu optimieren, daß die von einer Steuereinheit ausgehenden Steuersignale rasch, mit äußerster Genauigkeit, exakt reproduzierbar und besonders wirkungsvoll, d.h. mit entsprechender Schwingungsamplitude, auf ein Kompensationselement übertragen werden können.

Diese Aufgabe wird erfindungsgemäß mit den Merkmalen nach dem Kennzeichen des Patentanspruches 1 gelöst.

Mit der erfindungsgemäßen schwingungsdämpfenden bzw. schwingungskompensierenden Lageranordnung gehen eine Reihe von Vorteilen einher. Der in einer besonders vorteilhaften Ausführungsform vorgesehene piezokeramische Aktuator gewährleistet ein schnelles und effektives Ansprechen auf die ihm zugeführten Steuersignale. Bei einer verschleißfreien Arbeitsweise ist überdies eine hohe Leistungsübertragung gewährleistet. Befindet sich die angelegte Steuerspannung bzw. Steuerspannungsfrequenz auf dem linearen Bereich der Übertragungshysteresis, so geht damit eine exakt reproduzierbare Befehlsübertragung einher. Wie aus den nachstehenden Ausführungsbeispielen der erfindungsgemäßen schwingungsdämpfenden Lageranordnung ersichtlich wird, erlaubt die Verwendung der Aktuator-Säule als Stellglied auch eine ausgesprochen große Flexibilität bei der konstruktiven Gestaltung der Lageranordnung an sich.
Die piezokeramischen Elemente sind zu einer Säule aufgeschichtet, wobei die Dickenänderung eines jedes Elementes aufgrund angelegter Spannung im Ergebnis einen relativ großen Hub der so gebildeten Wandlersäule zur (Elongator), so daß damit eine angeschlossene Membran oder auch ein angeschlossenes Ventil oder z. B. der Lagerkern eines hydraulischen Motorlagers oder auch ein rein mechanisch wirkendes Motorlager beaufschlagt werden können. Neben zusätzlich anbringbaren Hub-Ubersetzungen ist es bei entsprechender Anordnung der einzelnen piezokeramischen Elemente auch möglich, diesen die Funktion eines Biegewandlers zu verleihen. Letztlich ist die Anwendung des piezokeramischen Aktuators zur Herbeiführung der gewünschten Kompensationswirkung nicht auf den Einbau in ein schwingungsdämpfendes Motorlager beschränkt, sondern erlaubt weiterführende Anwendungsmöglichkeiten, wie dies im letzten Ausführungsbeispiel gezeigt ist.

Weitere Vorteile der erfindungsgemäßen schwingungsdämpfenden Lageranordnung sind in den Unteransprüchen definiert, die vorteilhafte Ausführungsformen beanspruchen.

Die erfindungsgemäße Lageranordnung wird nachstehend anhand von Ausführungsbeispielen weiter erläutert. Dabei zeigt
- **Fig. 1**: das schaltungsmäßige Zusammenwirken zwischen einer Steuereinheit und einem schwingungsdämpfenden Motorlager,
- **Fig. 2**: eine erste Ausführungsform eines schwingungsdämpfenden hydraulischen Motorlagers mit einem säulenförmigen piezokeramischen Aktuator,
- **Fig. 3**: eine weitere Ausführungsform eines schwingungsdämpfenden Motorlagers unter Einbeziehung einer zusätzlichen Hub-Übersetzung,
- **Fig. 4**: eine weitere Gestaltungsmöglichkeit einer Hub-Übersetzung in Anlehnung an die Ausführung nach Fig. 3, wobei die Abwandlung im Einsatz hydraulischer Übersetzungsmittel besteht,
- **Fig. 5**: eine weitere Anwendungsmöglichkeit einer hydraulischen Hub-Übersetzung, wobei die wirksamen Elemente unmittelbar am Lagerkern angreifen,
- **Fig. 6**: eine nochmals abgewandelte Ausführungsform für eine hydraulische Hub-Übersetzung, wobei das Motorlager rein mechanisch wirkend ausgebildet ist,
- **Fig. 7**: eine letzte Anwendungsmöglichkeit eines piezokeramischen Aktuators als konstruktiver Bestandteil eines an einen Motorblock angesetzten Lagerbockes.

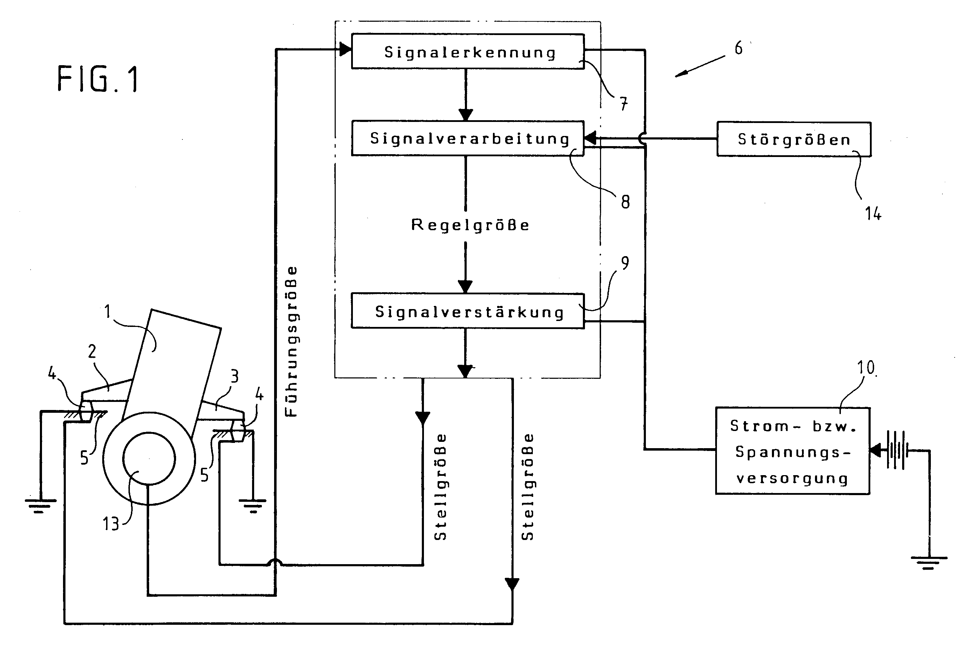

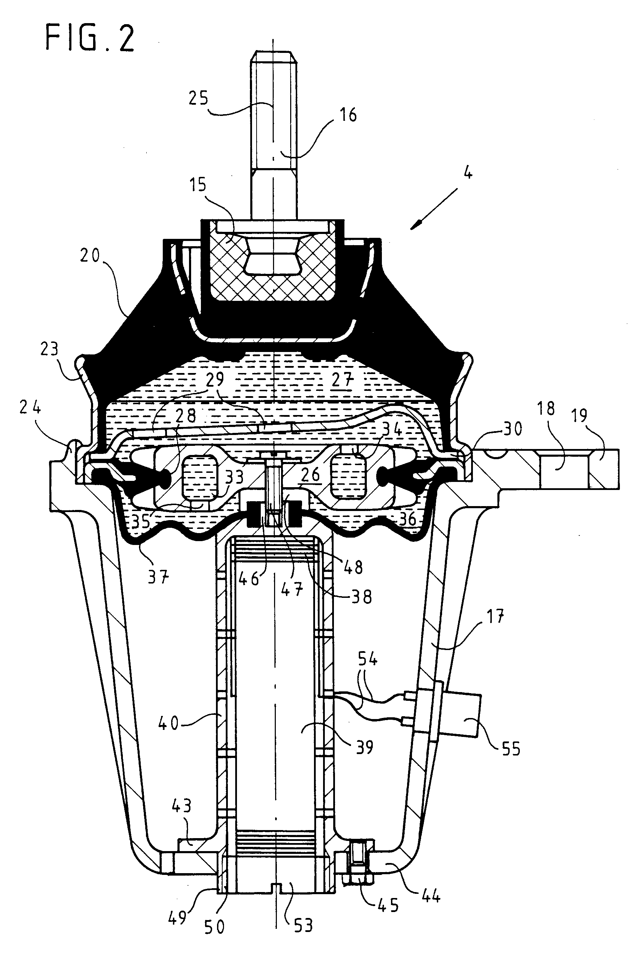

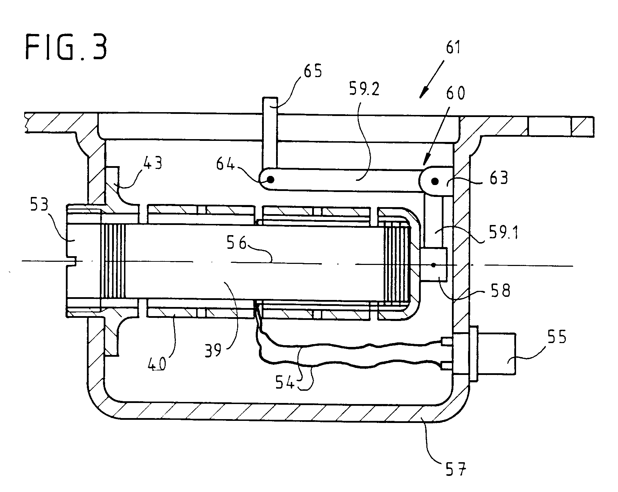

In Fig. 1 ist als Anwendungsbeispiel für die erfindungsgemäße schwingungsdämpfende Lageranordnung ein Hubkolbenmotor 1 für ein Kraftfahrzeug dargestellt, der über seitlich angesetzte Lagerböcke 2,3 von einem der Einfachheit halber hier im einzelnen nicht dargestellten Fahrzeugrahmen 5 gestützt ist. Die Lagerung erfolgt dabei unter Zwischenschaltung von schwingungsdämpfenden Motorlagern 4, wie sie entsprechend dem Ausführungsbeispiel nach Fig. 2 oder den konstruktiven Abwandlungen nach den Fig. 3 bis 6 gestaltet sein können.
Den mit piezokeramischen Aktuatoren ausgestatteten Motorlagern 4 ist eine Steuereinheit 6 zugeordnet, beinhaltend eine Signalerkennung 7 mit Signalverarbeitung 8 als Regeleinheit zur Erkennung und Verarbeitung eingeleiteter Signale sowie eine nachgeschaltete Signalverstärkung 9 zur Verstärkung der von der Steuereinheit 6 ausgegebenen Signale. Jedes der vorgenannten Systemelemente ist mit einer von Fahrzeugbatterie oder Lichtmaschine gespeisten Strom- bzw. Spannungsversorgung 10 gekoppelt. Von dieser wird die zum Betreiben der Steuereinheit 6 benötigte Energie, aber auch die Leistungsversorgung für die piezokeramischen Aktuatoren abgeleitet.
An den Hubkolbenmotor 1 ist ein im Detail nicht näher gezeigter Signalgeber 13 angesetzt, der ein repräsentatives Führungssignal (z. B. Drehzahl, Drehwinkel als Funktion des Zündzeitpunktes etc.) des Hubkolbenmotors 1 erfaßt und der Signalerkennung 7 zuführt. Das entsprechend erfaßte Führungsgrößen-Signal wird dann der Signalverarbeitung 8 zugeführt, die von weiteren Signalgebern zusätzliche Störgroßen (z. B. Drosselklappenstellung, Unterdruck im Motor-Ansaugrohr, eingelegter Gang usw.) 14 erhält. Die entsprechend verarbeiteten Signale werden im Sinne einer Kompensation der Auswirkungen dieser in Störschwingungen sich äußernden Einflüsse als Stellgrößen an die als Stellglieder dienenden piezokeramischen Aktuatoren der Motorlager 4 abgegeben.

In Fig. 2 ist ein erstes Ausführungsbeispiel eines solchermaßen gestalteten Motorlagers 4 gezeigt. Dessen wesentliche Bauteile sind dabei ein Lagerkern 15 mit darin verankertem Stehbolzen 16 zur Herstellung der Verbindung mit dem hier nicht gezeigten Motor-Lagerbock, ein Widerlager 17, welches einen mit Bohrungen 18 versehenen Auflageflansch 19 für die karosserieseitige Befestigung des Motorlagers 4 aufweist, sowie ein zwischen Lagerkern 16 und Widerlager 17 angeordnetes und mit beiden verbundenes, als Elastomerkörper ausgebildetes Federelement 20. Letzteres ist in einen metallenen Ring 23 eingefaßt, der formschlüssig in eine entsprechend gestaltete Aufnahme 24 des Widerlagers 17 eingesetzt ist. Innerhalb des Motorlagers 4 ist eine bezüglich der Motorlager-Längsachse 25 axial bewegliche Membran 26 angeordnet, die zusammen mit dem Ring 23 und dem Federelement 20 einen mit einer Dämpfungsflüssigkeit gefüllten Arbeitsraum 27 einschließen. Die Axialbeweglichkeit der Membran 26 wird dadurch sichergestellt, daß diese auf ihrem Umfang in einen aus biegeelastischem Material hergestellten Tragring 28 eingefaßt ist. Oberhalb der Membran 26 und innerhalb des Arbeitsraumes 27 ist eine mit einer Anzahl von Durchbrechungen 29 versehene Anschlagplatte 30 als Auslenkungsbegrenzung für die Membran 26 vorgesehen und randseitig in die bereits genannte Aufnahme 24 des Widerlagers 17 eingefaßt.
Die Membran 26 weist einen Ringkanal 33 auf, der über eine obere Eintrittsöffnung 34 bzw. eine untere Austrittsöffnung 35 den Arbeitsraum 27 mit einem ebenfalls flüssigkeitsgefüllten Ausgleichsraum 36 verbindet. Letzterer wird von einen unteren elastischen Balg 37 abgeschlossen, der umfangsseitig in die bereits genannte Aufnahme 24 des Widerlagers 17 eingefaßt ist.

Die axialen Schwingungsbewegungen der Membran 26 zur Kompensation der durch die Störschwingungen verursachten Druckänderungen der Flüssigkeit im Arbeitsraum 27 werden über ein Stellglied eingeleitet, welches aus einzelnen piezokeramischen Elementen 38 besteht, die in der Weise übereinandergeschichtet sind, daß dadurch eine als Elongator wirkende Säule gebildet wird.
Zur Aufnahme der Aktuator-Säule 39 innerhalb des Widerlagers 17 ist dieses topfförmig ausgebildet, um die notwendige Bauhöhe zu bieten. Die Aktuator-Säule 39 ist von einer zylindrischen Rohrfeder 40 umgeben, deren Umfangswand in gewissen Abständen geschlitzt ist, so daß ihre vorgegebene Länge unter Krafteinwirkung veränderlich ist. Das untere Ende der Rohrfeder 40, deren Längsachse 25 mit der des Motorlagers 4 identisch ist, weist einen Stützflansch 43 auf, der am Boden 44 des Widerlager 17 zur Anlage kommt und daran mittels Schraubverbindungen 45 befestigbar ist.
Das obere Ende der Rohrfeder 40 ragt durch eine Öffnung 46 des Balges 37 hindurch und ist über eine Schraubverbindung 47 unter Zwischenschaltung einer den flüssigkeitsdichten Abschluß gewährleistenden Scheibe 48 formschlüssig mit der Membran 26 verbunden.

Ein unterer, zylinderförmiger Ansatz 49 der Rohrfeder 40 ragt aus dem Boden 44 des Widerlagers 17 heraus und trägt ein Innengewinde 50, in das eine Spannschraube 53 eingesetzt ist. Über diese läßt sich die Aktuator-Säule 39 unter eine definierte Druck-Vorspannung setzen.
Die Aktuator-Säule 39 ist über entsprechende Anschlußleitungen 54 mit einem an der Umfangswand des Widerlagers 17 angesetzten elektrischen Anschluß 55 verbunden, der letztlich den Kontakt zur Steuereinheit 6 herstellt, wie dies in Fig. 1 gezeigt ist. Werden nun entsprechende Steuersignale (elektrische Spannungen entsprechender Größenordnung und Frequenz) auf die piezokeramischen Elemente 38 eingeleitet, so bewirkt dies eine Dickenänderung derselben, die sich zu einer Gesamt-Dickenänderung bzw. Höhenänderung der Aktuator-Säule 39 aufsummiert und damit eine Axialbewegung der Membran 26 mit vorgebenem Hub- und vorgebener Frequenz hervorruft. Die Rückstellkraft bewirkt die über die Spannschraube 53 entsprechend vorgespannte Rohrfeder 40.

In diesem Zusammenhang ist anzumerken, daß anstelle der Rohrfeder 40, die letztendlich auch dafür sorgt, daß die Aktuator-Säule 39 ihre Form beibehält, auch ein geschlossenes, seitenkräftestabiles Hüllrohr vorgesehen sein kann, wobei dann aber zur Bereitstellung der notwendigen Rückstellkraft beispielsweise Tellerfedern integriert sein müßten, um die Aktuator-Säule 39 zu beaufschlagen. Aufgrund der fehlenden Längenveränderlichkeit eines solchen Hüllrohres müßte dann selbstverständlich die Kopplung zwischen Membran 26 und Aktuator-Säule 39 abweichend zu der in Fig. 2 gezeigten Verbindung ausgeführt werden.
Die konstruktive Gestaltung einer solchen Verbindung zwischen Aktuator-Säule 39 und Membran 26 unter Verwendung von Tellerfedern und Hüllrohr liegt im handwerklichen Können eines Fachmannes, so daß ein näheres Eingehen hierauf unter Angabe eines konkreten Ausführungsbeispieles sich an dieser Stelle erübrigt. Wesentlich ist lediglich, daß die Aktuator-Säule 39 in unmittelbaren Formschluß mit der Membran 26 steht und innerhalb des Hüllrohres über Tellerfedern in eine Druck-Vorspannung bringbar ist.

Grundsätzlich ist festzustellen, daß mit der aus den piezokeramischen Elementen 38 aufgebauten Aktuator-Säule 39 selbstversändlich nicht ausschließlich nur die Beaufschlagung einer Membran innerhalb des Motorlagers 4 möglich ist. Es können nämlich ohne weiteres in Abhängigkeit von der speziellen konstruktiven Gestaltung eines solchen Motorlagers beliebige Elemente angesteuert werden, die dem Zweck dienen, eine Kompensation von durch Störschwingungen verursachten Druckänderungen der Motorlager-Flüssigkeit zu bewirken. Denkbar wären in diesem Zusammenhang beispielsweise die Ansteuerung von Trennwänden des Arbeitsraumes oder die Beaufschlagung von Drosselöffnungen in Membranen oder Trennwänden zur Veränderung deren Durchflußcharakteristik usw..

Eine konstruktive Variationsmöglichkeit hinsichtlich der Anordnung der Aktuator-Säule 39 ist in Fig. 3 gezeigt. Sie ist dabei mit horizontaler Längsachse 56 in das entsprechend gestaltete, wiederum topfförmig ausgebildete Widerlager 57 eingesetzt. Die kontruktiven Merkmale von Rohrfeder 40, Stützflansch 43, Spannschraube 53, Anschlußleitungen 54 und elektrischem Anschluß 55 stimmen mit denen gemäß Ausführungsform nach

Fig. 2 überein, so daß weitere Erläuterungen hierzu entbehrlich sind. An der der Spannschraube 53 gegenüberliegenden Stirnseite der Rohrfeder 40 ist diese mit einem Gelenksteg 58 versehen, an dem ein kurzer Gelenkarm 59.1 eines L-förmigen Gelenkhebels 60 angebunden ist. Als stationärer Anlenkpunkt für den Gelenkhebel 60 ist ein weiterer Gelenksteg 63 vorgesehen, der im oberen Bereich des Widerlagers 57 an dessen Umfangswand befestigt ist. Ein längerer Gelenkarm 59.2 des Gelenkhebels 60 ist endseitig am Anlenkpunkt 64 mit einem Stößel 65 gekoppelt, über den beispielsweise die Axialbewegung der Membran, wie sie in Fig. 2 gezeigt ist, eingeleitet werden kann.

In Fig. 3 ist nur der untere, die Rohrfeder 40 mit der Aktuator-Säule 39 enthaltende Teil eines Motorlagers 61 gezeigt, da der obere Teil entsprechend der Ausführungsform nach Fig. 2 gestaltet sein könnte, aber auch ohne weiteres eine konstruktive Abwandlung erfahren kann. In gleicher Weise gilt das weitere in Zusammenhang mit der Ausführungsform nach Fig. 2 gesagte, so daß der Stößel 65 beispielsweise auch andere Elemente (z. B. Drosselöffnung) eines Motorlagers beaufschlagen kann, die dem Zweck dienen, eine Kompensation von durch Störschwingungen verursachte Druckänderungen der Motorlager-Flüssigkeit zu bewirken. Mit der Ausführungsform nach Fig. 3 läßt sich aufgrund der zusätzlich verwendeten Hebelübersetzung ein gegenüber der Ausführungsform nach Fig. 2 größerer Hub erzielen. Sollte dies nicht erforderlich sein, so wäre auch denkbar, die Länge der Rohrfeder 40 mit enthaltener Aktuator-Säule 39 etwa zu halbieren, was zur Folge hätte, daß das Widerlager 57 wesentlich kleiner gestaltet werden könnte.

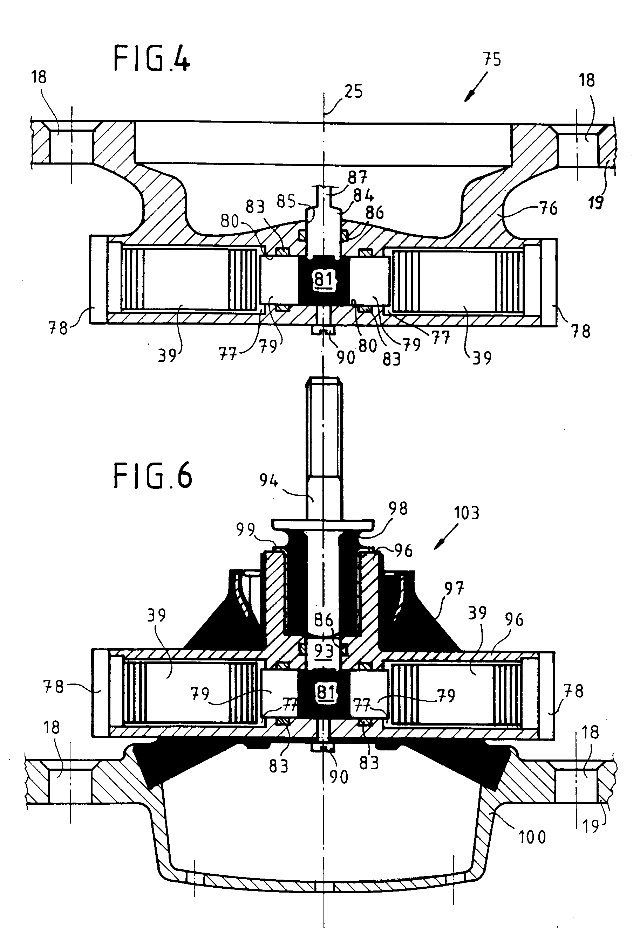

Eine weitere Ausführungsform für eine Hub-Übersetzung an einem mit einer Dämpfungsflüssigkeit gefülltem Motorlager 75 ist aus Fig. 4 ersichtlich. Auch in diesem Falle wird wiederum in Anlehnung an die Ausführungsform nach Fig. 3 die axial bewegliche Membran beaufschlagt. Ebenso zeigt die Darstellung der Einfachheit halber nur den unteren Teil (Widerlager 76) des Motorlagers 75, da der obere Teil (Lagerkern) ohne weiteres der Ausführungsform nach Fig. 2 entsprechen kann, so daß diesbezüglich auf die Erläuterungen in Zusammenhang mit dieser Figur verwiesen wird.

Das Widerlager 76 weist zunächst entsprechend der Ausführungsform nach Fig. 2 die für die karosserieseitige Befestigung vorgesehenen Bohrungen 18 am Auflageflansch 19 auf. Im seinem unteren Bereich sind zwei querliegend angeordnete, d. h. bezüglich der Motorlager-Längsachse 25 rechtwinklig angeordnete Aufnahmebohrungen 77 eingebracht, die zueinander fluchtend ausgerichtet sind und dabei der Aufnahme von aus Fig. 2 bekannten, in der Darstellung nach Fig. 4 lediglich schematisiert dargestellten Aktuator-Säulen 39 dienen, die in Rohrfedern aufgenommen sind.
Den endseitigen Abschluß der Aufnahmebohrungen 77 bilden Verschlußelemente 78, auf denen sich wiederum die Aktuator-Säulen 39 abstützen und die auch die Spannmittel enthalten, über die die Aktuator-Säulen 39 unter Vorspannung setztbar sind. Die jeweils gegenüberliegende Seite einer jeden Aktuator-Säule 39 beaufschlagt einen Zylinderkolben 79, der in eine an die Aufnahmebohrung 77 sich anschließende und im Querschnitt etwas kleiner gehaltene Zylinderbohrung 80 hineinragt. In das Widerlager 76 eingebrachte und den Zylinderkolben 79 zugeordnete Kolbenringe 83 sorgen dafür, daß eine Hydraulikflüssigkeit 81, welche sich in dem von beiden Zylinderkolben 79 eingeschlossenen Raum befindet, nicht in die Aufnahmebohrungen 77 für die Aktuator-Säulen 39 überströmen kann. Besagte Hydraulikflüssigkeit 81 wirkt auf einen Stellkolben 84, der in einer mit der Motorlager-Längsachse 25 fluchtenden Zylinderbohrung 85 des Widerlagers 76 geführt ist, wobei auch hier wieder geeignete Kolbenringe 86 für einen dichtenden Abschluß sorgen. Der Stellkolben 84 greift mit seiner im Querschnitt verjüngten Kolbenstange 87 mittig an der axialbeweglichen Membran an, so daß sich Axialbewegungen der Kolbenstange 87 unmittelbar als Bewegungen der Membran auswirken. Die Einleitung dieser Axialbewegungen geschieht über die entsprechend angesteuerten Aktuator-Säulen 39 in bekannter Weise.
Aufgrund der Querschnittsverhältnisse zwischen den jeweiligen Zylinderbohrungen 80,85 und aufgrund des Umstandes, daß zwei Aktuator-Säulen 39 bzw. zwei die Bewegung einleitende Zylinderkolben 79 vorgesehen sind, ergibt sich eine sehr wirksame Hub-Übersetzung für den Stellkolben 84.

Eine in eine untere Gewindebohrung des Widerlagers 76 eingesetzte Schraube 90 ermöglicht es, die Hydraulikflüssigkeit 81 einzufüllen bzw. wieder abzulassen.

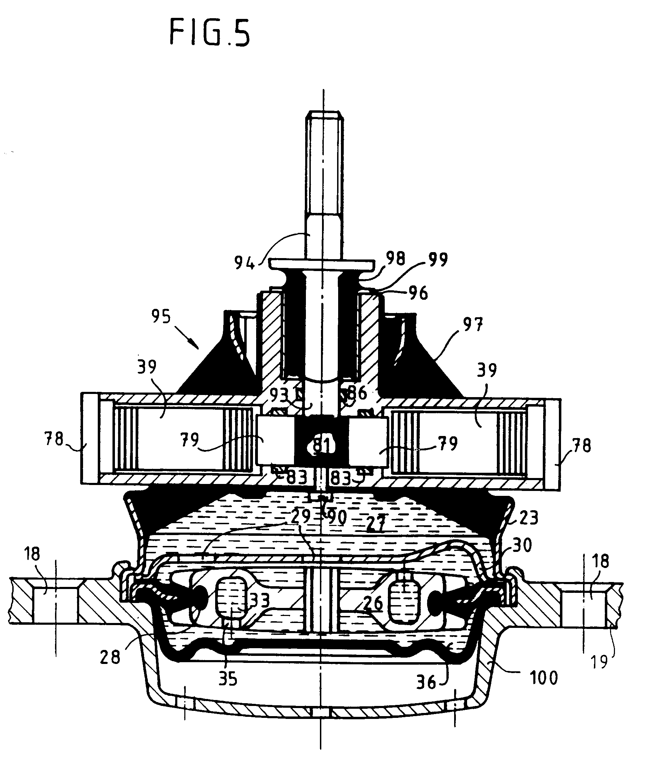

Fig. 5 zeigt eine an die Ausführungsform nach Fig. 4 anknüpfende weitere Ausführungsform für eine mit hydraulischen Mitteln erreichbare Hub-Übersetzung. Der wesentliche Unterschied gegenüber der vorbeschriebenen Ausführungsform ist darin zu sehen, daß ein von der Hydraulikflüssigkeit 81 beaufschlagter Stellkolben 93 nun nicht an der axialbeweglichen Membran 26 sondern an einem den Lagerkern im wesentlichen bestimmenden Stehbolzen 94 eines Motorlagers 95 angreift. Zu diesem Zweck sind die die Hub-Übersetzung bewirkenden Hydraulikeinheiten mit den Aktuator-Säulen 39, die im prinzipiellen Aufbau der Ausführungsform nach Fig. 5 entsprechen, in ein Gehäuse 96 eingesetzt, welches vom Federelement 97 des Motorlagers 95 getragen wird.

Das untere Ende des Stehbolzens 94 ist von einer Hülse 98 aus elastischem Material umfaßt, welche wiederum in eine Buchse 99 eingesetzt ist, die in das Gehäuse 96 eingepreßt ist. Das Gehäuse 96 mit den eingesetzten Aktuator-Säulen 39 ist somit quasi Bestandteil des Lagerkernes. Die Relativbeweglichkeit zwischen Gehäuse 96 und Stehbolzen 94 ist durch die elastische Hülse 98 sichergestellt.
Durch die anderweitige Zuordnung der hydraulischen Hub-Übersetzung kann ein Widerlager 100 des Motorlagers 95, welches wiederum den mit den Bohrungen 18 für die karosserieseitige Befestigung versehenen Auflageflansch 19 aufweist, wesentlich einfacher gestaltet werden.

Bezüglich der weiteren konstruktiven Gestaltung der Hydraulikelemente (Zylinderkolben 79, Kolbenringe 83,86 usw.) und der Anordnung und Halterung der Membran 26 wird auf die darauf bezogenen Erläuterungen in Zusammenhang mit den Ausführungsformen nach Fig. 4 (Hydraulikelemente) bzw. Fig. 2 (Membran-Anordnung) verwiesen.

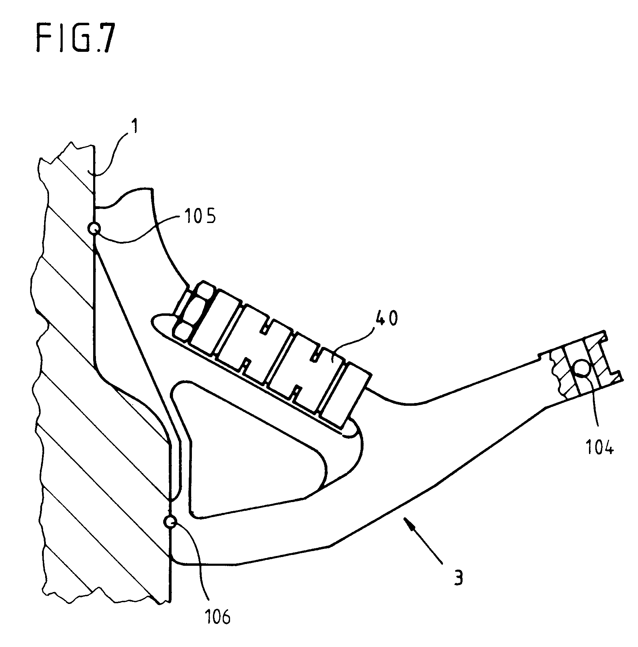

Fig. 6 zeigt eine letzte Ausführungsform zur Verwirklichung einer hydraulischen Hub-Übersetzung. Auch in diesem Falle greift der Stellkolben 93 wiederum am Stehbolzen 94 des Lagerkernes an. Auch das die Aktuator-Säulen 39 tragende Gehäuse 96 ist wiederum in das Federelement 97 integriert. Hierzu weist das Federelement 97 an gegenüberliegenden Seiten kreisförmige Öffnungen für den Durchtritt des an dieser Stelle kreisförmigen Querschnitt aufweisenden Gehäuses 96 auf. Die weitere konstruktive Gestaltung entspricht ebenfalls der Ausführungsform nach Fig. 5, so daß ein weiteres Eingehen darauf sich an dieser Stelle erübrigt. Der wesentliche Unterschied gegenüber der vorgenannten Ausführungsform ist darin zu sehen, daß es sich hier um ein rein mechanisch wirkendes Motorlager 103 handelt. Dies bedeutet, daß die in den vorbeschriebenen Ausführungsformen im Hohlraum zwischen Federelement 97 und Widerlager 100 angeordneten Einbauten entfallen.

Bei beiden vorstehend beschriebenen Ausführungsformen wäre selbstverständlich auch ohne weiteres möglich, nicht den Lagerkern, sondern das Widerlager durch die Aktuator-Säulen zu beaufschlagen.

Die Anwendungsmöglichkeit der Piezokeramik-Elemente zur Kompensation von Störschwingungen bei schwingungsdämpfenden Lageranordnungen für einen schwingenden Körper sind nun aber keinesfalls auf den unmittelbaren Einsatz innerhalb eines flüssigkeitsgefüllten oder rein mechanisch wirkenden Motorlagers beschränkt. Die Ausführungsform nach Fig. 7 zeigt hierzu eine entsprechend alternative Vorgehensweise.
Der mit seinen Randabmessungen angedeutete Motorblock 1 ist, wie dies bereits in Zusammenhang mit Fig.1 erläutert wurde, unter Zwischenschaltung von Lagerböcken 2,3, wovon in Fig. 7 einer 3 in schematisierter Darstellung gezeigt ist, im Bereich eines Lagerauges 104 am Fahrzeugrahmen gelagert. Die Anbindung des Lagerbockes 3 an den Hubkolben-motor 1 erfolgt an den Anbindungsstellen 105,106. Auf die Tragstruktur des Lagerbockes 3 im einzelnen soll hier nicht näher eingegangen werden, da diese im Hinblick auf die konstruktiven Gegebenheiten des verwendeten Hubkolbenmotors 1 sowie aufgrund fahrzeugseitiger Abmessungen und Randbedingungen unterschiedlich sein kann.
Innerhalb der Tragstruktur des Lagerbockes 3 ist eine Rohrfeder 40 mit integrierter Aktuator-Säule 39 angeordnet, die sich mit ihrer Längserstreckung zwischen einer Anbindungsstelle 105 des Lagerbockes 3 am Hubkolbenmotor 1 und dem Lagerauge 104 befindet. Die prinzipielle Anordnung und Gestaltung von Rohrfeder 40 mit integrierter Aktuator-Säule 39 kann der gemäß Ausführungsform nach Fig. 2 entsprechen, so daß bei Beaufschlagung der piezokeramischen Elemente mit einer geeigneten elektrischen Spannung auf die Tragstruktur des Lagerbockes 3 Vibrationen entsprechend der mit einer bestimmten Frequenz erfolgenden Längenänderung der Aktuator-Säule eingeleitet werden. Gleichzeitig werden natürlich durch den Hubkolbenmotor 1 die bekannten Störschwingungen auf den Lagerbock 3 übertragen. Durch entsprechende Steuerung der von der Aktuator-Säule 39 ausgehenden Schwingungen über die in Fig. 1 gezeigte Steuereinheit 6 kann so eine Kompensation der vom Hubkolbenmotor 1 ausgehenden Störschwingungen erreicht werden, so daß zusätzliche Maßnahmen am Motorlager selbst zur Herbeiführung des gleichen Effektes entbehrlich sind. Das Motorlager kann dann in der im Stand der Technik bekannten Art und Weise mit einem relativ einfachen konstruktiven Aufbau gestaltet werden, da dessen Anbindungsstelle im Bereich des Lagerauges 104 bereits frei von Störschwingungen ist.
Abweichend von der Anwendung piezokeramischer Elemente gemäß der aufgezeigten Ausführungsbeispiele wäre auch denkbar und im Rahmen der Erfindung liegend, andere, den piezoelektrischen Effekt nutzende Werkstoffe innerhalb der Lageranordnung in geeigneter Weise einzusetzen.

## Patentansprüche

1. Schwingungsdämpfende und Schwingungskompensierende Lageranordnung für einen in einem Kraftfahrzeug angeordneten und gelagerten schwingenden Körper (1), mit einer zugeordneten Steuereinheit (6), die mindestens ein mit einem Signalgeber (13) erfaßbares Führungssignal des schwingenden Körpers (1) aufnimmt und nach Verarbeitung des Führungssignales Steuersignale an mindestens ein innerhalb der Lageranordnung vorgesehenes und Elemente der Lageranordnung beaufschlagendes Stellglied abgibt, um so eine Kompensation von Störschwingungen zu bewirken, wobei das Stellglied als ein den umgekehrten piezoelektrischen Effekt ausnutzendes Bauteil (39) ausgebildet ist, **dadurch gekennzeichnet,** daß das Bauteil ein als Elongator wirkender Aktuator ist, der von einer Anzahl einzelner Elemente (38) gebildet wird, die, eine Aktuator-Säule (39) bildend, übereinandergeschichtet sind.

2. Lageranordnung nach Anspruch 1, **dadurch gekennzeichnet,** daß der schwingende Körper ein innerhalb des Kraftfahrzeug-Motorraumes angeordnetes Aggregat ist, beispielsweise ein Verbrennungsmotor (1), und die Lagerordnung als diesen tragende Motorlager (-4,61,75,95,103) ausgebildet ist, mit jeweils einem Lagerkern (15,94) sowie einem Widerlager (17,57,76,100) für eine motorseitige und karosserieseitige Kopplung und einem zwischengeschaltetem elastischen Federelement (20,97).

3. Lageranordnung nach Anspruch 2, **dadurch gekennzeichnet,** daß das Motorlager (4,61,75,95) einen mit einer Dämpfungsflüssigkeit gefüllten Arbeitsraum (27) sowie einen davon über ein zwischengeschaltetes Element (26) getrennten und ebenfalls flüssigkeitsgefüllten Ausgleichsraum (36) aufweist.

4. Lageranordnung nach Anspruch 2 oder 3, **dadurch gekennzeichnet,** daß die Aktuatorsäule (39) wahlweise den Lagerkern (94) oder das Widerlager (100) des Motorlagers (95,103) beaufschlagt.

5. Lageranordnung nach Anspruch 3, **dadurch gekennzeichnet,** daß die Aktuatorsäule (39) das als auslenkbare Membran ausgebildete zwischengeschaltete Element (26) oder diesem funktionell unmittelbar zugeordnete Einbauten des Motorlagers (4,61,75,95) beaufschlagt.

6. Lageranordnung nach einem oder mehreren der Ansprüche 1-5, **dadurch gekennzeichnet,** daß die Übertragung des Stellweges der Aktuatorsäule (39) über eine Einrichtung (60) zur mechanischen Hub-Übersetzung erfolgt.

7. Lageranordnung nach einem oder mehreren der Ansprüche 1-5, **dadurch gekennzeichnet,** daß die Übertragung des Stellweges des Aktuatorsäule (39) über eine Einrichtung zur hydraulischen Hub-Übersetzung erfolgt.

8. Lageranordnung nach Anspruch 7, **dadurch gekennzeichnet,** daß zur hydraulischen Hub-Übersetzung in einem Gehäuse (76) rechtwinklig zur Motorlager-Längsachse (25) gerichtete und jeweils gegenüberliegend angeordnete Aufnahmebohrungen (77) eingebracht sind, die zueinander fluchtend ausgerichtet sind und der Aufnahme von zwei Aktuatorsäulen (39) dienen, denen jeweils ein Zylinderkolben (79) endseitig zugeordnet ist und die Zylinderkolben (79) zusammen mit einem an dem zu beaufschlagenden Element (26,94) angreifenden Stellkolben (84,93) einen mit Hydraulikflüssigkeit (81) gefüllten geschlossenen Raum bilden.

9. Lageranordnung nach Anspruch 8, **dadurch gekennzeichnet,** daß das Gehäuse (96) wahlweise in das Federelement (97) oder in das Widerlager (76) des Motorlagers (75,95,103) eingebettet ist.

10. Lageranordnung nach einem oder mehreren der Ansprüche 1 bis 9, **dadurch gekennzeichnet,** daß zur Aufnahme der Aktuator-Säule (39) wahlweise eine zylindrische Rohrfeder (40) oder ein Hüllrohr vorgesehen ist, innerhalb dem der Aktuator-Säule (39) zugeordnete Federelemente vorgesehen sind.

11. Lageranordnung nach Anspruch 10, **dadurch gekennzeichnet,** daß das Widerlager (17,57) des Motorlagers (4,61) zur unmittelbaren Aufnahme der Aktuator-Säule (39) topfförmig ausgebildet ist und eine Rohrfeder (40) sich mit ihrem einen Ende an einer entsprechenden Wandung des Widerlagers (17,57) abstützt und über ihr gegenüberliegendes Ende mit dem zu beaufschlagenden Element (26) des Motorlagers (4,61) gekoppelt ist.

12. Lageranordnung nach Anspruch 1, **dadurch gekennzeichnet,** daß die Aktuatorsäule (39) innerhalb eines Lagerbockes (2,3) angeordnet ist, der als Stützkräfte übertragendes Zwischenglied zwischen dem schwingenden Körper 1 und dessen stationärem Auflager angeordnet ist.

13. Lageranordnung nach Anspruch 12, **dadurch gekennzeichnet,** daß innerhalb der Tragstruktur des Lagerbockes (2,3) eine Rohrfeder (40), ein Hüllrohr oder dergl. mit integrierter Aktuator-Säule (39) angeordnet ist, wobei die Aktuator-Säule (39) sich mit ihrer Längserstreckung zwischen einer Anbindungsstelle (75) des Lagerbockes (2,3) am schwingenden Körper (Hubkolbenmotor 1) und einem Lagerauge (74) befindet.

## Claims

1. Vibration-damping and vibration-compensating arrangement of bearings for a vibrating body (1) disposed and mounted in a motor vehicle, having an associated control unit (6) which records at least one reference signal from the vibrating body (1) that can be detected with a sensing element (13) and after processing the reference signal sends control signals to at least one final control element provided inside the bearing arrangement and acting on elements of the bearing arrangement, in order thereby to effect compensation of spurious vibrations, the final control element being in the form of a component (39) which exploits the reverse piezoelectric effect,
characterised in that the component is an actuator operating as an elongator, constituted by a number of individual elements (38) layered over one another to form an actuator column (39).

2. Bearing arrangement according to claim 1, characterised in that the vibrating body is an assembly arranged inside the engine compartment of the motor vehicle, for example an internal combustion engine (1), and the bearing arrangement is in the form of engine bearings (4, 61, 75, 95, 103) supporting said engine (1), each having a bearing core (15, 94) and an abutment (17, 57, 76, 100) for a coupling on the side nearest the engine and nearest the vehicle body, and between them an elastic spring member (20, 97).

3. Bearing arrangement according to claim 2, characterised in that the engine bearing (4, 61, 75, 95) incorporates a working compartment (27) filled with a damping fluid and a compensating compartment (36) which is likewise filled with fluid and is separated from said working compartment (27) by an element (26) interposed therebetween.

4. Bearing arrangement according to claim 2 or 3, characterised in that the actuator column (39) acts on the bearing core (94) or the abutment (100) of the engine bearing (95, 103), as necessary.

5. Bearing arrangement according to claim 3, characterised in that the actuator column (39) acts on the intermediate element (26) which is in the form of a displaceable diaphragm or on installations of the engine bearing (4, 61, 75, 95) directly associated therewith in function.

6. Bearing arrangement according to one or more of claims 1 to 5, characterised in that the travel of the actuator column (39) is transmitted via a device (60) for mechanical stroke translation.

7. Bearing arrangement according to one or more of claims 1 to 5, characterised in that the travel of the actuator column (39) is transmitted via a device for hydraulic stroke translation.

8. Bearing arrangement according to claim 7, characterised in that for hydraulic stroke translation there are incorporated in a housing (76) locator bores (77) directed at right angles to the longitudinal axis (25) of the engine bearings and opposing one another, said bores being aligned flush with one another and used to locate two actuator columns (39) with each of which the end of a cylinder piston (79) is associated, and the cylinder pistons (79) together with a final control piston (84, 93) which attacks the element (26, 94) to be acted upon constituting a closed space filled with hydraulic fluid (81).

9. Bearing arrangement according to claim 8, characterised in that the housing (96) is embedded in the spring member (97) or in the abutment (76) of the engine bearing (75, 95, 103), as necessary.

10. Bearing arrangement according to one or more of claims 1 to 9, characterised in that to locate the actuator column (39) either a cylindrical Bourdon tube (40) or a jacket tube is provided, as necessary, inside which are provided spring members associated with the actuator column (39).

11. Bearing arrangement according to claim 10, characterised in that the abutment (17, 57) of the engine bearing (4, 61) is pot-shaped to directly receive the actuator column (39) and a Bourdon tube (40) rests with one end on a corresponding wall of the abutment (17, 57) and is coupled by means of its opposite end to the element (26) to be acted upon of the engine bearing (4, 61).

12. Bearing arrangement according to claim 1, characterised in that the actuator column (39) is arranged inside a bearing bracket (2, 3) which as an intermediate member transmitting supporting forces is arranged between the vibrating body (1) and the stationary support thereof.

13. Bearing arrangement according to claim 12, characterised in that within the loadbearing structure of the bearing bracket (2, 3) there is arranged a Bourdon tube (40), a jacket tube or the like, with an integrated actuator column (39), the actuator column (39) being situated with its longitudinal orientation between a connecting point (75) of the bearing bracket (2, 3) on the vibrating body (reciprocating engine 1) and a bearing boss (74).

## Revendications

1. Dispositif de support amortissant et compensant les vibrations, pour un corps vibrant (1) monté dans un véhicule automobile, comportant une unité de commande associée (6), qui reçoit au moins un signal de poussée du corps vibrant (1) pouvant être détecté par un capteur de signaux (13) et qui, après avoir traité le signal de poussée, délivre des signaux de commande à au moins un organe de réglage prévu à l'intérieur du dispositif de support et sollicitant des éléments du dispositif de support de manière à compenser des vibrations perturbatrices, l'organe de réglage étant réalisé sous la forme d'un élément de construction (39) utilisant l'effet piézo-électrique inverse, **caractérisé** en ce que l'élément de construction est un actionneur agissant comme un élongateur, qui est formé d'un certain nombre de composants individuels (38) qui sont stratifiés pour former un actionneur-colonne (39).

2. Dispositif de support selon la revendication 1, **caractérisé** en ce que le corps vibrant est un ensemble disposé à l'intérieur du compartiment moteur du véhicule automobile, par exemple un moteur à combustion (1), et le dispositif de support est réalisé sous la forme d'un support de moteur (4, 61, 75, 95, 103) comportant un noyau de support (15, 94), ainsi qu'un élément de contre-appui (17, 57, 76, 100), respectivement pour l'accouplement côté moteur et l'accouplement côté carrosserie, et un élément à ressort élastique (20, 97) monté entre eux.

3. Dispositif de support selon la revendication 2, **caractérisé** en ce que le support de moteur (4, 61, 75, 95) présente une chambre de travail (27) remplie d'un liquide d'amortissement et une chambre de compensation (36), séparée de la chambre de travail par un élément intercalé (26) et également remplie de liquide.

4. Dispositif de support selon la revendication 2 ou 3, **caractérisé** en ce que l'actionneur-colonne (39) sollicite au choix le noyau de support (94) ou l'élément de contre-appui (100) du support de moteur (95, 103).

5. Dispositif de support selon la revendication 3, **caractérisé** en ce que l'actionneur-colonne (39) sollicite l'élément intercalé (26), réalisé sous la forme d'une membrane déformable, ou des éléments internes du support de moteur (4, 61, 75, 95) qui sont, du point de vue fonctionnel, directement associés à cet élément (26).

6. Dispositif de support selon l'une quelconque des revendications 1 à 5, **caractérisé** en ce que la transmission de la course de réglage de l'actionneur-colonne (39) s'effectue par l'intermédiaire d'un dispositif (60) assurant une transformation mécanique de la course.

7. Dispositif de support selon l'une quelconque des revendications 1 à 5, **caractérisé** en ce que la transmission de la course de réglage de l'actionneur-colonne (39) s'effectue par l'intermédiaire d'un dispositif assurant une transformation hydraulique de la course.

8. Dispositif de support selon la revendication 7, **caractérisé** en ce qu'en vue de la transformation hydraulique de la course, des logements opposés (77), orientés perpendiculairement à l'axe longitudinal (25) du support de moteur, sont percés en alignement mutuel dans un carter (96) et servent à recevoir deux actionneurs-colonnes (39) à chacun desquels un piston cylindrique (79) est associé sur son côté terminal, et les pistons cylindriques (79) forment, conjointement avec un piston de réglage (84, 93) agissant sur l'élément (26, 94) à solliciter, un espace clos rempli de liquide hydraulique (81).

9. Dispositif de support selon la revendication 8, **caractérisé** en ce que le carter (96) est encastré au choix dans l'élément à ressort (97) ou dans l'élément de contre-appui (76) du support de moteur (75, 95, 103).

10. Dispositif de support selon l'une quelconque des revendications 1 à 9, **caractérisé** en ce qu'il est prévu au choix, pour recevoir l'actionneur-colonne (39), un ressort tubulaire cylindrique (40) ou un tube d'enveloppe à l'intérieur duquel sont prévus des éléments à ressort associés à l'actionneur-colonne (39).

11. Dispositif de support selon la revendication 10, **caractérisé** en ce que l'élément de contre-appui (17, 57) du support de moteur (4, 61) est configuré en pot afin de recevoir directement l'actionneur-colonne (39), et un ressort tubulaire (40) s'appuie par une de ses extrémités contre une paroi correspondante de l'élément de contre-appui (17, 57) et est accouplé, par son extrémité opposée, à l'élément (26) à solliciter du support de moteur (4, 61).

12. Dispositif de support selon la revendication 1, **caractérisé** en ce que l'actionneur-colonne (39) est disposé à l'intérieur d'un sabot d'appui (2, 3) qui est disposé, en tant qu'organe intermédiaire transmettant des forces de soutien, entre le corps vibrant (1) et son appui fixe.

13. Dispositif de support selon la revevendication 12, **caractérisé** en ce qu'un ressort tubulaire (40), tube d'enveloppe ou similaire, avec actionneur-colonne (39) incorporé, est disposé à l'intérieur de la structure porteuse du sabot d'appui (2, 3), l'actionneur-colonne (39) s'étendant, dans sa direction longitudinale, entre un point de fixation (75) du sabot d'appui (2, 3) au corps vibrant (moteur 1 à pistons alternatifs) et un oeillet de montage (74).
